# EUROPÄISCHE PATENTSCHRIFT

(11) **EP 2 593 363 B1**
(45) Veröffentlichungstag und Bekanntmachung des Hinweises auf die Patenterteilung: **20.03.2019**
(21) Anmeldenummer: 11749726.3
(22) Anmeldetag: 13.07.2011
(51) Int. Cl.: G06F 17/00, B64C 27/00

(54) **FRÜHERKENNUNG EINES WIRBELRINGSTADIUMS**
EARLY IDENTIFICATION OF A VORTEX RING PHASE
DÉTECTION PRÉCOCE D'UN ÉTAT DE VORTEX

(30) Priorität: 13.07.2010 DE 102010027081
(43) Veröffentlichungstag der Anmeldung: 22.05.2013
(73) Patentinhaber: Deutsches Zentrum für Luft- und Raumfahrt e.V., 51147 Köln (DE); OFFICE NATIONAL D'ETUDES ET DE RECHERCHES AEROSPATIALES, 91120 Palaiseau (FR)
(72) Erfinder: ABILDGAARD, Max, 38108 Braunschweig (DE); BINET, Laurent, 13450 Grans (FR)
(74) Vertreter: Aisch, Sebastian
(86) Internationale Anmeldenummer: PCT/EP2011/003494
(87) Internationale Veröffentlichungsnummer: WO 2012/007157

(56) Entgegenhaltungen:
- FR-A1- 2 688 314
- FR-A1- 2 921 635
- DAVID J VARNES: "Development of a Helicopter Vortex Ring State Warning System Through a Moving Map Display Computer", THESIS,, 1. September 1999 (1999-09-01), XP009100651,
- JOHNSON W: "Model for Vortex Ring State Influence on Rotorcraft Flight Dynamics", NASA TECHNICAL PUBLICATION, MOFFET FIELD CALIFORNIA USA, Nr. 2005-213477, 1. Dezember 2005 (2005-12-01), Seiten 1-65, XP002481739,

## Beschreibung

Die Erfindung betrifft ein Verfahren zur Früherkennung des Wirbelringstadiums bei einem Hubschrauber. Die Erfindung betrifft auch ein Flugassistenzsystem hierzu.

Das System Hubschrauber ist gekennzeichnet durch einen aus einer Mehrzahl von Rotorblättern bestehenden Rotor, der sich mit einer definierten Geschwindigkeit dreht. Die einzelnen Rotorblätter weisen dabei ein bestimmtes Profil auf und sind darüber hinaus an dem Rotorkopf des Rotors um ihre Längsachse drehbar angeordnet, so dass durch das Zusammenspiel von Rotorblattprofil und Anstellwinkel während des Umlaufes ein Auftrieb erzeugt wird, der denen von Starrflüglern ähnelt.

Aufgrund des durch den Rotorumlauf bedingten Auftriebs innerhalb der Rotorebene werden vertikale Luftbewegungen innerhalb der Rotorebene induziert. Im Normalfall wird ein Luftdurchfluss von oben durch den Rotor nach unten induziert. Mit anderen Worten, aufgrund des Auftriebes, der durch den sich drehenden Rotor erzeugt wird und dem Hubschrauber dadurch seine Flugeigenschaft verleiht, wird die Luft durch den Rotor nach unten gedrückt, so dass hier eine vertikale Luftbewegung, auch Abwind genannt, zu erkennen ist.

Der Rotor kann auch bei einer Anströmung von unten einen Auftrieb produzieren. Dabei handelt es sich um die s.g. Autorotation oder Windmühlenstadium, das z.B. beim Triebwerksausfall genutzt wird. Es wird dann der Einstellwinkel der Rotorblätter reduziert und die einzelnen Blätter generieren ihren eigenen Vortrieb wie auch ein Segelflugzeug ohne Antrieb fliegen kann. In diesem Fall wird der Rotor von unten angeströmt. Der Luftstrom wird durch den Rotor etwas abgebremst, welches eine Kraft nach oben generiert. Der Abwind ist nun über dem Rotor.

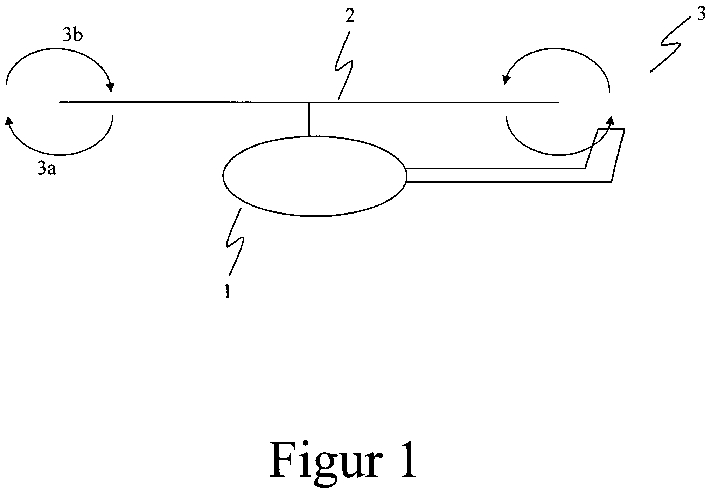

Zwischen dem Normalfall und der Autorotation kann es zu einem gefährlichen Flugzustand kommen, wenn der Hubschrauber aufgrund seiner hohen Sinkrate und des sehr langsamen Vorwärtsfluges in seinen eigenen Abwind fällt, was als Wirbelringstadium (VRS - Vortex Ring State) bekannt ist. Dabei bilden sich an den Rotorblattspitzen Ringwirbel derart, dass die nach unten gedrückten Luftmassen oberhalb des Rotors wieder angesaugt werden. Die nach unten gedrückte Luft kann dabei nicht schnell genug entweichen, so dass der Auftrieb plötzlich abreist, so dass der Hubschrauber teilweise unkontrollierbar wird und rapide an Höhe verliert. Typischerweise gehen bei einem solchen kritischen Flugmanöver bis zu 100 m Höhe verloren, bis der Hubschrauber entsprechend wieder abgefangen werden kann. Gerade in Bodennähe, für dessen Flugbetrieb Hubschrauber insbesondere aufgrund ihrer Systemeigenschaft geeignet sind, hat dies fatale Folgen. Figur 1 zeigt ein Beispiel eines solchen Wirbelringstadiums.

Ein Problem dabei ist, dass die Vorhersage eines solchen Wirbelringstadiums mit hohen Ungenauigkeiten behaftet ist, da das Entstehen der Wirbel von vielen Faktoren abhängig ist. So muss zum Einen eine entsprechend hohe Sinkrate eingestellt werden und zum Anderen ein entsprechender langsamer bis gar kein Vorwärtsflug existieren. Darüber hinaus kann der Zeitpunkt des Eintretens des Wirbelringstadiums von einer Reihe von atmosphärischen Faktoren abhängig sein, die Vorhersageverfahren sehr ungenau machen.

Ein weiteres Problem, das durch den Rotorabwind verursacht wird, sind die hochgradig ungenauen Messungen der Relativbewegung der den Hubschrauber umgebenden Luftmassen. Solche Sensoren, welche eine Relativbewegung der ein Luftfahrzeug umgebenden Luftmassen detektieren, messen dabei den auftretenden Staudruck und können so die Geschwindigkeit eines Luftfahrzeuges gegenüber der umgebenden Luft ermitteln. Solch ein Sensor ist beispielsweise unter dem Pitotrohr bekannt. Für Höhenänderungen wird dabei meist das Variometer eingesetzt, welches die Änderungsgeschwindigkeit des von der Höhe abhängigen Luftdruckes misst.

All diese Sensoren haben dabei den Nachteil, dass sie die Relativbewegung zu der das Luftfahrzeug umgebenden Luft messen, was innerhalb des Abwindes (unterhalb des Rotors) eines Hubschrauberrotors nur bedingt möglich ist. Denn der aus dem Rotorauftrieb induzierte Abwind verfälscht dabei die Messung der Relativgeschwindigkeit der umgebenden Luftmassen und bietet somit nur eine näherungsweise Schätzung einer solchen Geschwindigkeit.

Aufgrund der Ungenauigkeiten der Messsensoren und der Gefahr des Wirbelringstadiums werden Hubschrauberpiloten heutzutage darin geschult, die kritischen Flugbereiche mit einer größtmöglichen Sicherheitsreserve zu umfliegen. Dies führt jedoch in vielen Bereichen zu einer unökonomischen Flugweise, die in heutigen Zeiten mehr und mehr an Bedeutung gewinnt.

Aus David J. Varnes: "Development of a helicopter vortex ring state warning system through a moving map display computer", Thesis, 1. September 1999 (1999-09-01), XP 009100651 ist ein Sammelsurium von verschiedenen Theorien über die Erkennung des Vortex Ring States sowie der diesbezüglichen Charakteristiken und Eigenschaften bekannt. So wird auf die sogenannte Power Settling Region Bezug genommen, die einen Bereich darstellen soll, bei dem mehr Energie für den Sinkflug notwendig ist als für den sogenannten Hover State. Darüber hinaus offenbart die D1, dass in Abhängigkeit einer vertikalen Vibration des Hubschraubers ebenfalls der Vortex Ring State erkennbar ist, da die Vibrationen in vertikaler Ebene innerhalb des Vortex Ring State signifikant zunimmt.

Ähnliches ist auch aus Johnson W.: "Model for vortex ring state influence on rotorcraft flight dynamics", NASA Technical Publication, Moffett Field, California, USA, Nr. 2005-213477, 1. Dezember 2005 (2005-12-01), Seite 1 bis 65, XP 002481739 bekannt, wo die Beeinflussung eines Wirbelringstadiums auf die Flugeigenschaften eines Hubschraubers beschrieben werden.

Aus der FR 2 921 635 ist ein Verfahren bekannt, bei dem das Erreichen des Vortex Ring States anhand einer Messung von vertikalen Bewegungsgeschwindigkeiten ermittelt werden kann.

Aus der FR 2 688 314 ist schließlich ein Verfahren zum Ermitteln der Luftgeschwindigkeit relativ zu dem Flugobjekt auf Basis von Onboard-Messungen bekannt.

### Aufgabe

Im Hinblick auf die oben genannte Problematik ist es daher Aufgabe der vorliegenden Erfindung, ein verbessertes Verfahren und ein entsprechendes Assistenzsystem anzugeben, mit dem die Nähe zum Wirbelringstadium detektiert werden kann und somit einen ökonomischeren und ökologischeren Flugbetrieb gewährleistet.

### Lösung

Die Aufgabe wird mit dem Verfahren der eingangs genannten Art erfindungsgemäß mit den Merkmalen des Patentanspruchs 1 gelöst.

Grundsätzlich reagiert der Hubschrauber bei Steuereingaben beispielsweise durch den Piloten sofort, d.h. die Flugsteuersignale, die zur Flugsteuerung bezüglich der vertikalen Bewegungsachse des Hubschraubers verwendet werden, resultieren linear in einer entsprechenden Bewegung der vertikalen Bewegungsachse. Hierbei ist die Unterscheidung wichtig, dass letztendlich das Verhalten des Hubschraubers durch die Steuersignale, die am Rotor ankommen, beeinflusst wird. Beispielhaft sei hier erwähnt, dass, wenn der Pilot eine Steuereingabe nach oben macht, die Steuersignale an den Rotor geschickt werden, die eine Vergrößerung des Anstellwinkels der Rotorblätter verursachen. Entsprechend reagiert der Hubschrauber dann auch mit einer vertikalen Bewegung nach oben.

Nun wurde erkannt, dass kurz vor dem Eintritt in das Wirbelringstadium sich dieses ansonst lineare Signalreaktionsmuster ändert. Entsprechende Steuereingaben werden dabei nicht sofort in entsprechende nach oben gerichtete Vertikalbewegungen umgesetzt, sondern sind abgeschwächt oder ganz und gar non-linear. Daher schlägt die vorliegende Erfindung vor, dass kontinuierlich die Flugsteuersignale, die zur Flugsteuerung des Hubschraubers bezüglich der vertikalen Bewegungsachse verwendet werden, ermittelt werden und die aus diesen Flugsteuersignalen resultierenden vertikalen Bewegungen des Hubschraubers ebenfalls entsprechend kontinuierlich detektiert werden, wobei die Früherkennung des Wirbelringstadiums dann anhand einer nicht-linearen Korrelation dieser beiden Informationen erfolgt. Denn anhand dieser Korrelation kann dann festgestellt werden, ob der Hubschrauber sich in der Nähe des Wirbelringstadiums bewegt, da seine Flugsteuersignale in ein verändertes Reaktionsverhalten des Hubschraubers resultieren.

Vorteilhafterweise werden dabei die Flugsteuersignale ermittelt, die sich aus den Steuereingaben des Piloten ergeben.

Um sicherzustellen, dass auch kontinuierlich entsprechende Flugsteuersignale und die daraus resultierenden Bewegungen in der vertikalen Bewegungsachse für die Früherkennung des Wirbelringstadiums vorliegen, werden erfindungsgemäß zusätzliche Steuersignale generiert und auf die Flugsteuersignale aufgeprägt. Dabei ist es denkbar, dass die zusätzlichen, automatisch generierten Steuersignale auch dann aufgeprägt werden, wenn die Flugsteuersignale keinerlei Veränderungen im Flugzustand herbeiführen würden, so dass der Hubschrauber lediglich eine Bewegung in der vertikalen Bewegungsachse aufgrund der generierten, zusätzlichen Steuersignale durchführt. Diese generierten zusätzlichen Steuersignale können insbesondere harmonische, niederfrequente Steuersignale sein.

Erfindungsgemäß erfolgt die Früherkennung des Wirbelringstadiums in Abhängigkeit einer nicht linearen Korrelation von Flugsteuersignalen und vertikalen Bewegung der vertikalen Bewegungsachse. Dabei wurde erkannt, dass gerade dann, wenn sich der Hubschrauber in seinem Flugzustand dem Wirbelringstadium nähert, dass dann die Korrelation zwischen Flugsteuersignal Flugsteuersignale mit den daraus resultierenden vertikalen Bewegungen nicht linear korrelieren,. Dies kann beispielsweise anhand eines Funktionsverlaufes ermittelt werden, wobei festzustellen ist, dass je flacher der Gradient der Kurve ist, desto näher sich der Hubschrauber am Wirbelringstadium befindet.

Zum Detektieren der Bewegung in der vertikalen Bewegungsachse des Hubschraubers werden vorteilhafterweise die Beschleunigung oder Geschwindigkeit in der Bewegungsachse ermittelt. Die vertikale Beschleunigung lässt sich dabei mittels einfacher Beschleunigungssensoren feststellen. Die Geschwindigkeit kann dabei beispielsweise mit Hilfe von GPS-Systemen detektiert werden.

Darüber hinaus wurde erkannt, dass insbesondere niederfrequente Flugsteuereingaben dafür geeignet sind, anhand der Korrelation mit den vertikalen Bewegungen die Nähe zum Wirbelringstadium zu ermitteln. Durch eine Frequenzanalyse der Flugsteuersignale, beispielsweise mittels einer Fouriertransformation lassen sich diese dabei leicht ermitteln.

Die Erfindung wird anhand der beigefügten Zeichnungen beispielhaft näher erläutert. Es zeigen:
- Figur 1: - schematische Darstellung des Wirbelringstadiums,
- Figur 2: - Darstellung der Abhängigkeit von Sinkgeschwindigkeit und Vorwärtsgeschwindigkeit,
- Figur 3: - schematische Darstellung der Steuerreaktionskette,
- Figur 4: - schematische Darstellung der Korrelation, und
- Figur 5: - Darstellung eines unterschiedlichen Input-Output-Verhaltens.

Die Figur 1 zeigt die schematische Darstellung des Wirbelringstadiums 3 bei einem Hubschrauber 1. Der Hubschrauber 1 hat einen Rotor 2, der sich mit einer entsprechenden Umlaufgeschwindigkeit dreht. Aufgrund des langsamen bis gar keinen Vorwärtsfluges und einer entsprechend hohen Sinkrate kommt der Hubschrauber 1 in sein eigenes Abwindfeld, so dass die nach unten gedrückte Luft 3a nicht schnell genug weg transportiert werden kann. Nach einer gewissen Zeit kommt es dann zu dem Effekt, dass der Rotor 2 die nach unten weg gedrückte Luft 3a oberhalb seines Rotors wieder ansaugt (dargestellt durch den Pfeil 3b), so dass die nach unten weg gedrückte Luft 3a wieder angesaugt wird. Dabei entsteht ein Wirbelring 3 um die Rotorblattspitzen, deren Flugzustand dann als Wirbelringstadium bezeichnet wird.

Das Problem dabei ist, dass aufgrund des Ansaugens des eigenen Abwindfeldes 3a der Auftrieb rapide abnimmt und der Hubschrauber somit zunächst einmal nach unten durchfällt. Dabei können meist mehrere hundert Meter verloren gehen, bis der Hubschrauber 1 wieder in einen normalen Flugzustand geführt werden kann.

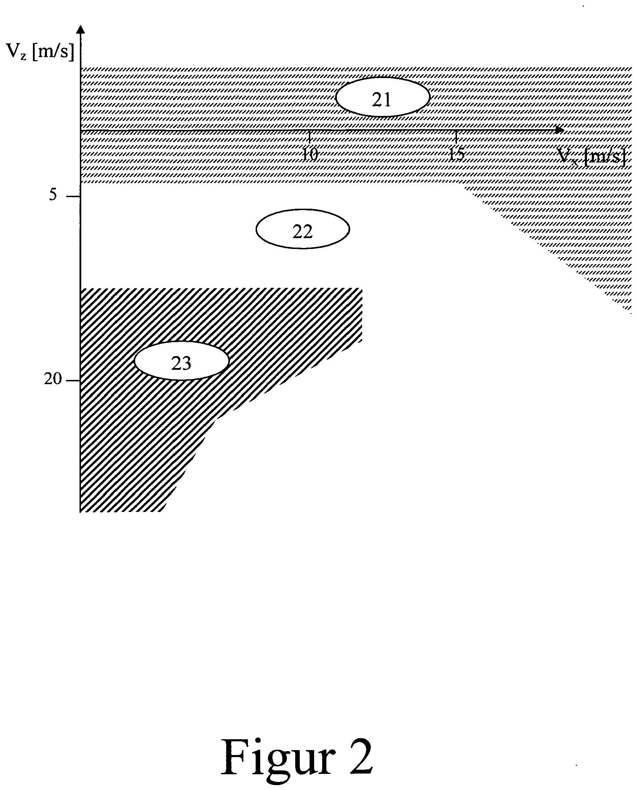

Figur 2 zeigt das Verhältnis zwischen Sinkgeschwindigkeit und Vorwärtsgeschwindigkeit. Dabei ist auf der x-Achse die Vorwärtsfluggeschwindigkeit aufgetragen (Vx in m/s), wobei auf der y-Achse die Sinkgeschwindigkeit (Vz in m/s) dargestellt ist. Im oberen Bereich 21 befindet sich der Hubschrauber in einem normalen Betriebsbereich. Hier besteht an keiner Stelle die Gefahr, dass der Hubschrauber in den Wirbelringstadium gerät.

Im dazwischenliegenden Bereich 22 befindet sich die befohlene Sicherheitsreserve. Dieser Bereich soll von den Piloten vermieden werden und dient dazu, dass der Hubschrauber nicht in das Wirbelringstadium gerät, wenn er am Rande des normalen Betriebsbereiches 21 fliegt. Befindet sich der Hubschrauber allerdings in dem Flugbereich 23, so befindet er sich im Wirbelringstadium. Dieser Bereich ist gekennzeichnet durch eine sehr geringe Vorwärtsfluggeschwindigkeit (< 10 m/s) sowie einer sehr hohen Sinkgeschwindigkeit (> 5 m/s). In diesem Bereich 23, der als höchst kritisch anzusehen ist, befindet sich der Hubschrauber dann in dem Wirbelringstadium, wie es in Figur 1 gezeigt ist.

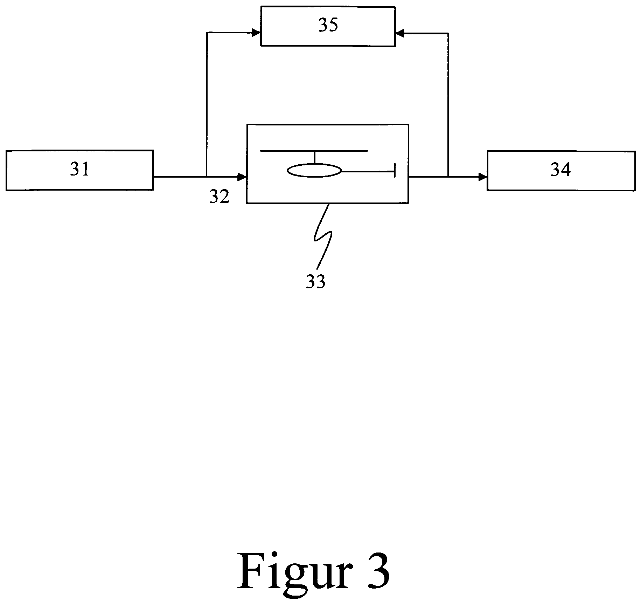

Figur 3 zeigt schematisch die Steuerreaktionskette, so wie sie für die Korrelation der vorliegenden Erfindung verwendet wird. Auf der linken Seite stehen die Steuereingaben 31, die als Flugsteuersignale 32 zur Flugsteuerung des Hubschraubers 33 verwendet werden. Diese Flugsteuersignale 32 können zum Einen Steuereingaben 31 sein, die von einem Piloten initiiert wurden. Um aber auch in jeder Situation niederfrequente Steuereingaben 31 zu erhalten, schlägt die vorliegende Erfindung vor, dass ein harmonisches Steuersignal zusätzlich zu den Steuereingaben 31 des Piloten erzeugt wird, das dann auf die Steuereingaben 31 aufgeprägt wird, so dass sich ein Flugsteuersignal 32 ergibt, welches aus den Steuereingaben 31 des Piloten und den harmonischen, automatisch generierten zusätzlichen Steuersignalen besteht. Diese Flugsteuersignale 32 werden dann zur Flugsteuerung des Hubschraubers 33 verwendet.

Aufgrund dieser Flugsteuersignale 32 ist bei dem Hubschrauber 33 ein entsprechendes Verhalten 34, insbesonderen bezüglich der vertikalen Bewegungsachse, zu erkennen. Ein solches Verhalten kann dabei beispielsweise die Lage, die Drehrate, die Beschleunigung oder die Geschwindigkeit sein, was sich mit entsprechenden Sensoren detektieren lässt.

Sowohl der Input (Flugsteuersignale 32) als auch der Output (Verhalten 34) werden in einen entsprechenden Flugassistenten 35 geleitet, so dass für jedes Flugsteuersignal auch eine entsprechende Bewegung des Hubschraubers in der vertikalen Bewegungsachse vorliegt. Dabei ist zu beachten, dass je nach Hubschraubermodell dieses Verhalten leicht zeitverzögert eintreten kann, so dass hier mitunter zwischen den Flugsteuersignalen 32 und dem daraus resultierenden Verhalten 34 eine zeitliche Lücke liegen kann, die mitberücksichtigt werden muss. Das Flugassistenzsystem 35 kann nun aufgrund der Korrelation zwischen den Flugsteuersignalen 32 und dem Verhalten 34 in der vertikalen Bewegungsachse des Hubschraubers 33 sowohl eine Früherkennung für das Wirbelringstadium als auch die Bestimmung der Relativgeschwindigkeit zur umgebenden Luft durchführen.

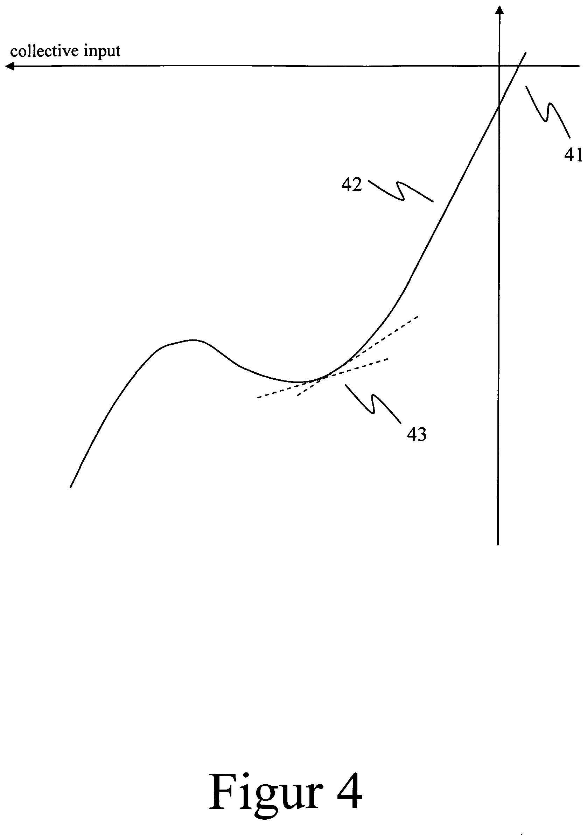

Diese Korrelation ist schematisch in Figur 4 dargestellt. Dort wird eine Kurve 41 gezeigt, die das Verhältnis von Flugsteuersignalen und Sinkgeschwindigkeit zeigt. Als Flugsteuersignal wird hier der "Kollektivinput" auf der x-Achse angegeben, der die Flugsteuerung bezüglich der vertikalen Bewegungsachse betritt. Auf der y-Achse ist die Sinkgeschwindigkeit als Bewegung in der vertikalen Bewegungsachse aufgetragen.

Wie zu erkennen ist, ist die Kurve 41 im oberen Bereich 42 strikt linear, was bedeutet, dass die Flugsteuersignale eine sofortige und lineare Bewegung zur Folge haben. Mit anderen Worten, das Verhalten des Hubschraubers bezüglich seiner vertikalen Bewegungsachse ist vollständig linear abhängig von dem Input.

Wird durch entsprechende Steuersignale die Sinkgeschwindigkeit erhöht, so wird auch die Gefahr eines Wirbelringstadiums größer. Ab einem bestimmten Moment ist dies in der Kurve 41 zu erkennen, und zwar im Bereich 43. Ab diesem Bereich ist das Verhältnis zwischen Sinkgeschwindigkeit und Steuereingabe verändert, d.h. eingegebene Flugsteuersignale haben eine Auswirkungen auf das Verhalten des Hubschraubers, die gegenüber dem Normalfall abweicht. Dieser geänderte Bereich 43 lässt sich beispielsweise anhand des Gradienten der Kurve in diesen Bereichen feststellen, und zwar derart, dass der Gradient an dieser Stelle abnimmt. Dabei wurde festgestellt, dass je mehr der Gradient abnimmt, desto näher rückt der Hubschrauber mit seinem Flugzustand in die Nähe des Wirbelringstadiums.

Diese in Figur 4 dargestellte Korrelation hat dabei den entscheidenden Vorteil, dass anhand der im Hubschrauber vorliegenden Daten nunmehr sicher festgestellt werden kann, wie nahe der Hubschrauber an dem kritischen Flugbereich des Wirbelringstadiums betrieben wird.

Unter Kenntnis dieser Korrelation, wie sie in Figur 4 dargestellt ist, lässt sich darüber hinaus auch die Relativgeschwindigkeit bezüglich der umgebenden Luft des Hubschraubers näherungsweise abschätzen, da aufgrund des Verhaltens des Hubschraubers festgestellt werden kann, in welchem Bereich er sich bewegt. Unter Kenntnis der Relativgeschwindigkeit, so wie sie von den Sensoren meist fehlerhaft geliefert wird, lässt sich dieses Signal dann mit Hilfe dieser vorliegenden Korrelation korrigieren. Denn je näher der Hubschrauber am kritischen Bereich des Wirbelringstadiums betrieben wird, desto ungenauer werden die von den Sensoren gelieferten Informationen bezüglich der Relativgeschwindigkeit der umgebenden Luft.

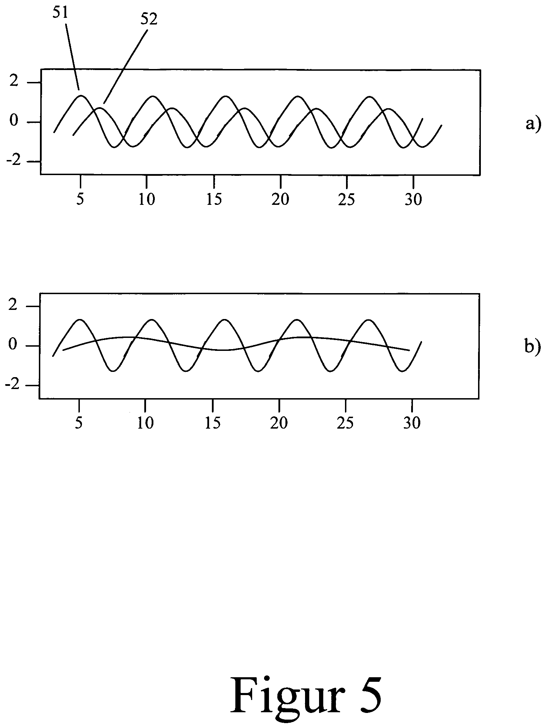

Figur 5 zeigt ein unterschiedliches Input-Output-Verhalten. Dabei wird ein harmonisches Steuersignal 51 generiert, das auf die Flugsteuersignale aufgeprägt wird und somit in die Flugsteuerung eingeht. Wie im oberen Diagramm a) dargestellt, erfolgt aufgrund der harmonischen Anregung durch das generierte zusätzliche Steuersignal 51 ein entsprechendes Verhalten in der vertikalen Bewegungsachse 52, das vollständig linear von dem Steuersignal 51 abhängt. Mit anderen Worten, der Hubschrauber befindet sich in dem Flugbereich, der in Figur 4 im linearen Bereich 42 gezeigt ist.

Kommt der Hubschrauber nun in den kritischen Bereich des Wirbelringstadiums, so verändert sich dieses Verhalten in der vertikalen Bewegungsachse, so wie es im Diagramm b) dargestellt ist. Trotz der harmonischen Anregung durch das harmonische Steuersignal 51 kann eine nicht lineare Reaktion bzw. Verhalten 53 festgestellt werden, was hier im Diagramm B mittels einer Fouriertransformation auf die Zeit übertragen wurde. Dabei ist festzustellen, dass die Bewegung in der vertikalen Bewegungsachse des Hubschraubers, so wie sie durch den Verlauf 53 im Diagramm B dargestellt ist, trotz des amplitudenstarken, harmonischen Steuersignals 51 sehr schwach ist, was darauf hindeutet, dass der Hubschrauber trotz Ansteuerung nur wenig Bewegung in der Hubachse vollzieht. Daraus lässt sich dann eine Früherkennung für das Wirbelringstadium ableiten bzw. die Nähe zum Wirbelringstadium anhand der Korrelation zwischen Ansteuerung und Bewegung feststellen.

## Patentansprüche

1. Verfahren zur Früherkennung des Wirbelringstadiums bei einem Hubschrauber, **gekennzeichnet durch** die Schritte:
- Ermitteln von Flugsteuersignalen zur Flugsteuerung bezüglich der vertikalen Bewegungsachse des Hubschraubers und Detektieren daraus resultierender Bewegungen in der vertikalen Bewegungsachse des Hubschraubers, wobei automatisch zusätzlichen Steuersignalen bezüglich der vertikalen Bewegungsachse des Hubschraubers generiert und die zusätzlichen Steuersignale auf die Flugsteuersignale aufgeprägt werden, und
- Früherkennung des Wirbelringstadiums des Hubschraubers in Abhängigkeit einer nicht-linearen Korrelation zwischen den Flugsteuersignalen und den vertikalen Bewegungen in der vertikalen Bewegungsachse.

2. Verfahren nach Anspruch 1, **gekennzeichnet durch** Ermitteln der Flugsteuersignale in Abhängigkeit von Steuereingaben zur Flugsteuerung eines Piloten bezüglich der vertikalen Bewegungsachse des Hubschraubers.

3. Verfahren nach Anspruch 1 oder 2, **gekennzeichnet durch** Generieren von zusätzlichen Steuersignalen als harmonische Steuersignale.

4. Verfahren nach einem der vorhergehenden Ansprüche, **gekennzeichnet durch** Früherkennung des Wirbelringstadiums in Abhängigkeit einer geänderten Korrelation von Flugsteuersignalen und vertikalen Bewegungen in der vertikalen Bewegungsachse.

5. Verfahren nach einem der vorhergehenden Ansprüche, **gekennzeichnet durch** Detektieren von Beschleunigungen, Lage, Drehraten und/oder Geschwindigkeiten als Bewegungen in der vertikalen Bewegungsachse des Hubschraubers.

6. Flugassistenzsystem zur Früherkennung des Wirbelringstadiums eines Hubschraubers, wobei der Flugassistent zur Durchführung des Verfahrens nach einem der vorhergehenden Ansprüche eingerichtet ist.

## Claims

1. A method for early detection of the vortex ring state in a helicopter, **characterized by** the steps:
- establishing flight control signals for flight control with regard to the vertical movement axis of the helicopter and detecting resultant movements in the vertical movement axis of the helicopter, whereby additional control signals are automatically generated with respect to the vertical movement axis of the helicopter and the additional control signals are impressed upon the flight control signals, and
- detecting early the vortex ring state of the helicopter in accordance with a non-linear correlation between the flight control signals and the vertical movements in the vertical movement axis.

2. The method as claimed in claim 1, **characterized by** establishing the flight control signals in accordance with control inputs for flight control made by a pilot with regard to the vertical movement axis of the helicopter.

3. The method as claimed in claim 1 or 2, **characterized by** generating additional control signals as harmonic control signals.

4. The method as claimed in one of the preceding claims, **characterized by** early detection of the vortex ring state in accordance with a changed correlation of flight control signals and vertical movements in the vertical movement axis.

5. The method as claimed in one of the preceding claims, **characterized by** detecting accelerations, position, rates of rotation and/or speeds as movements in the vertical movement axis of the helicopter.

6. A flight assistance system for early detection of the vortex ring state of a helicopter, wherein the flight assistance system is adapted to carry out the method as claimed in one of the preceding claims.

## Revendications

1. Procédé de détection précoce d'un état de vortex dans un hélicoptère, **caractérisé par** les étapes suivantes :
- la détermination de signaux de commande de vol pour la commande de vol par rapport à l'axe de mouvement vertical de l'hélicoptère et la détection de mouvements qui en résultent suivant l'axe de mouvement vertical de l'hélicoptère, dans lequel des signaux de commande supplémentaires par rapport à l'axe de mouvement vertical de l'hélicoptère sont générés automatiquement et les signaux de commande supplémentaires sont appliqués aux signaux des commandes de vol, et
- la détection précoce de l'état de vortex de l'hélicoptère en fonction d'une corrélation non linéaire entre les signaux de commande de vol et les mouvements verticaux suivant l'axe de mouvement vertical.

2. Procédé selon la revendication 1, **caractérisé par** la détermination des signaux de commande de vol en fonction d'entrées de commande pour la commande de vol d'un pilote par rapport à l'axe de mouvement vertical de l'hélicoptère.

3. Procédé selon la revendication 1 ou 2, **caractérisé par** la génération de signaux de commande supplémentaires sous forme de signaux de commande harmoniques.

4. Procédé selon l'une des revendications précédentes, **caractérisé par** la détection précoce de l'état de vortex en fonction d'une corrélation modifiée de signaux de commande de vol et de mouvements verticaux suivant l'axe de mouvement vertical.

5. Procédé selon l'une des revendications précédentes, **caractérisé par** la détection d'accélérations, d'attitudes, de vitesses de rotation et/ou de vertex en tant que mouvements suivant l'axe de mouvement vertical de l'hélicoptère.

6. Système d'assistance au vol pour la détection précoce de l'état de vortex d'un hélicoptère, dans lequel l'assistant de vol est conçu pour la mise en oeuvre du procédé selon l'une des revendications précédentes.
